(19) Europäisches Patentamt
European Patent Office
Office européen des brevets

(11) EP 4 023 710 A1

(12) **EUROPEAN PATENT APPLICATION**
published in accordance with Art. 153(4) EPC

(43) Date of publication:
**06.07.2022 Bulletin 2022/27**

(21) Application number: **20856338.7**

(22) Date of filing: **24.08.2020**

(51) International Patent Classification (IPC):
***C08L 1/02*** *(2006.01)* ***C08L 23/26*** *(2006.01)*
***C08L 101/00*** *(2006.01)*

(52) Cooperative Patent Classification (CPC):
**C08B 15/06; C08L 1/02; C08L 23/26; C08L 101/00; D06M 13/432**

(86) International application number:
**PCT/JP2020/031806**

(87) International publication number:
**WO 2021/039706 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.08.2019 JP 2019157359**

(71) Applicant: **Daio Paper Corporation**
**Ehime 799-0492 (JP)**

(72) Inventors:
- **MATSUSUE, Ikko**
**Shikokuchuo-shi, Ehime 799-0492 (JP)**
- **IMAI, Takaaki**
**Shikokuchuo-shi, Ehime 799-0492 (JP)**
- **OCHIAI, Yu**
**Shikokuchuo-shi, Ehime 799-0492 (JP)**

(74) Representative: **Held, Stephan**
**Meissner Bolte Patentanwälte**
**Rechtsanwälte Partnerschaft mbB**
**Widenmayerstraße 47**
**80538 München (DE)**

(54) **FIBROUS-CELLULOSE COMPOSITE RESIN AND PRODUCTION METHOD THEREFOR**

(57) Provided are a fibrous cellulose composite resin excellent in strength, and a method for producing the same. The fibrous cellulose composite resin includes microfiber cellulose, a resin, and an acid-modified resin, wherein the microfiber cellulose has hydroxyl groups, which are substituted with carbamate groups, and has been washed and defibrated into an average fiber width of 0.1 μm or larger, in which the amount of the byproduct is 10 % or less per 100 parts by mass of a carbamate-modified cellulose. The production method includes heat-treating a cellulose raw material and urea to obtain a carbamate-modified cellulose, washing the carbamate-modified cellulose, defibrating the carbamate-modified cellulose to obtain a dispersion of carbamate-modified microfiber cellulose having an average fiber width of 0.1 μm or larger, mixing the dispersion and an acid-modified resin to obtain a material containing carbamate-modified microfiber cellulose, and kneading the material with a resin to obtain a composite resin.

EP 4 023 710 A1

## Description

Technical Field

The present invention relates to a fibrous cellulose composite resin and a method for producing the same.

Background Art

Fine fibers like cellulose nanofibers and microfiber cellulose (microfibrillated cellulose) have recently been attracting attention for use as a reinforcing material for resins. However, fine fibers are hydrophilic, whereas resins are hydrophobic, so that fine fibers, for use as a reinforcing material for resins, have problems with dispersibility. In view of this, the present inventors have proposed substitution of hydroxyl groups in fine fibers with carbamate groups (see Patent Literature 1). According to this proposal, dispersibility of fine fibers is improved and, consequently, the reinforcing effect on resins is improved. Yet, various researches have still been conducted, such as on reduction in lowering of fracture strain. Lowering of fracture strain will lead to breaking or cracking of resins.

Citation List

Patent Literature

Patent Literature 1: JP 2019-001876 A

Summary of Invention

Problems to be Solved by the Invention

It is a primary object of the present invention to provide a fibrous cellulose composite resin of which lowering of fracture strain is reduced, as well as a method for producing the same.

Means for Solving the Problem

Conventional development, for example, the development described in the Patent Literature mentioned above, focused on modification of fine fibers, and revealed that introduction of carbamates (carbamation) was advantageous among a number of modification processes including esterification, etherification, amidation, and sulfidation. In contrast, the present invention does not focus on, but premises on the introduction of carbamates and, through various tests, the present inventors have sought, for solving the above problem (reduction in lowering of fracture strain), how to improve which properties and what is the suitable method for manufacture for the purpose, to thereby reach the present invention. The means thus reached is a fibrous cellulose composite resin containing fibrous cellulose, a resin, and an acid-modified resin, wherein part or all of the fibrous cellulose is microfiber cellulose, wherein the microfiber cellulose has hydroxyl groups, part or all of which are each substituted with a carbamate group, and has been defibrated into an average fiber width of 0.1 μm or larger, and wherein an amount of a byproduct generated in the substitution with a carbamate group is 10 % or less per 100 parts by mass of a carbamate-modified cellulose obtained through washing.

Effect of the Invention

According to the present invention, there is provided a fibrous cellulose composite resin of which lowering of fracture strain is reduced, as well as a method for producing the same.

Embodiments for Carrying out the Invention

Next, embodiments for carrying out the present invention will be discussed. The embodiments are mere examples of the present invention, and the scope of the present invention is not limited by the scopes of the present embodiments.

The fibrous cellulose composite resin according to the present embodiment contains fibrous cellulose (referred to also as cellulose fibers hereinbelow), a resin, and an acid-modified resin. Part or all of the fibrous cellulose is microfiber cellulose. The microfiber cellulose has hydroxyl groups (-OH), part or all of which are each substituted with a carbamate group. In the fibrous cellulose composite resin, the amount of byproducts generated in the substitution with the carbamate groups is 10 % or less per 100 part by mass of a carbamate-modified cellulose obtained through washing. For obtaining

the fibrous cellulose composite resin, a carbamate-modified cellulose is obtained from a cellulose raw material, washed and defibrated, and further mixed with an acid-modified resin, and kneaded with a resin. The details are discussed below.

Note that the amount of the byproducts is measured according to the following procedure.

A reaction product obtained by carbamate-modification reaction of urea and the fibrous cellulose is diluted with distilled water to have a solid concentration of 1 %, mixed and stirred in a mixer, and dewatered by means of a No. 2 paper filter and a Buchner funnel. The washing operation from the diluting to the dewatering is repeated twice. Then, the obtained solid material is dried at 105 °C for 6 hours to provide the carbamate-modified cellulose obtained through washing. The amount of the byproducts is calculated by subtracting the amount of the carbamate-modified cellulose from the amount of the reaction product obtained by the carbamate-modification reaction.

(Cellulose Raw Material)

The cellulose raw material (referred also to "raw material pulp" hereinbelow) may be one or more members selected and used from the group consisting of, for example, wood pulp made from hardwood, softwood, or the like; non-wood pulp made from straw, bagasse, cotton, hemp, bast fibers, or the like; and de-inked pulp (DIP) made from recovered used paper, waste paper, or the like. These various raw materials may be in the form of a ground product (powdered product), such as those referred to as cellulose-based powder.

In this regard, however, the raw material pulp is preferably wood pulp in order to avoid contamination of impurities as much as possible. As the wood pulp, one or more members may be selected and used from the group consisting of, for example, chemical pulp, such as hardwood kraft pulp (LKP) and softwood kraft pulp (NKP), and mechanical pulp (TMP).

The hardwood kraft pulp may be hardwood bleached kraft pulp, hardwood unbleached kraft pulp, or hardwood semi-bleached kraft pulp. Similarly, the softwood kraft pulp may be softwood bleached kraft pulp, softwood unbleached kraft pulp, or softwood semi-bleached kraft pulp.

As the mechanical pulp, one or more members may be selected and used from the group consisting of, for example, stone ground pulp (SGP), pressurized stone ground pulp (PGW), refiner ground pulp (RGP), chemi-ground pulp (CGP), thermo-ground pulp (TGP), ground pulp (GP), thermomechanical pulp (TMP), chemithermomechanical pulp (CTMP), refiner mechanical pulp (RMP), and bleached thermomechanical pulp (BTMP).

(Carbamation)

The cellulose raw material is carbamated prior to defibration, to thereby obtain a carbamate-modified cellulose. Introduction of carbamate (carbamation) may be performed by carbamation of the cellulose raw material followed by making the resulting product finer (defibration), or by making the cellulose raw material finer followed by carbamation. In general, either the defibration or the carbamation may precede. However, it is preferred to perform the carbamation first, followed by the defibration, as in the present embodiment. This is because the cellulose raw material before the defibration may be highly effectively dewatered, and the heating associated with the carbamation may facilitate the defibration of the cellulose raw material.

The process of carbamating the cellulose raw material may generally be divided into, for example, a mixing step, a removing step, and a heating step. Here, the mixing step and the removing step may together be referred to as a preparation step wherein a mixture to be subjected to the heating step is prepared.

In the mixing step, the microfiber cellulose and at least one of urea and derivatives thereof (sometimes referred to simply as "urea or the like" hereinbelow) are mixed in a dispersion medium.

The urea and derivatives thereof may be, for example, urea, thiourea, biuret, phenylurea, benzylurea, dimethylurea, diethylurea, tetramethylurea, or compounds obtained by substituting the hydrogen atoms of urea with alkyl groups. One or a combination of a plurality of these urea and derivatives thereof may be used, and use of urea is preferred.

The lower limit of the mixing ratio by mass of the urea or the like to the cellulose raw material (urea or the like / cellulose raw material) is preferably 10/100, more preferably 20/100. The upper limit thereof is preferably 300/100, more preferably 200/100. With a mixing ratio by mass of 10/100 or higher, the carbamation efficiency is improved. With a mixing ratio by mass over 300/100, the carbamation plateaus.

The dispersion medium is usually water, but other dispersion media, such as alcohol or ether, or a mixture of water and other dispersion media may be used.

In the mixing step, for example, the cellulose raw material and the urea or the like may be added to water, the cellulose raw material may be added to an aqueous solution of the urea or the like, or the urea or the like may be added to a slurry containing the cellulose raw material. The addition may be followed by stirring for homogeneous mixing. Further, the dispersion liquid containing the cellulose raw material and the urea or the like may optionally contain other components.

In the removing step, the dispersion medium is removed from the dispersion liquid containing the cellulose raw material and the urea or the like obtained from the mixing step. By removing the dispersion medium, the urea or the like

may efficiently be reacted in the subsequent heating step.

The removal of the dispersion medium is preferably carried out by volatilizing the dispersion medium under heating. By this process, only the dispersion medium may efficiently be removed, leaving the components including the urea or the like.

The lower limit of the heating temperature in the removing step is, when the dispersion medium is water, preferably 50 °C, more preferably 70 °C, particularly preferably 90 °C. At a heating temperature of 50 °C or higher, the dispersion medium may efficiently be volatilized (removed). On the other hand, the upper limit of the heating temperature is preferably 120 °C, more preferably 100 °C. At a heating temperature over 120 °C, the dispersion medium and urea may react, resulting in self-decomposition of urea.

In the removing step, duration of the heating may suitably be adjusted depending on the solid concentration of the dispersion liquid, or the like, and may specifically be, for example, 6 to 24 hours.

In the heating step following the removing step, the mixture of the cellulose raw material and the urea or the like is heat treated. In this heating step, part or all of the hydroxy groups of the cellulose raw material are reacted with the urea or the like, to thereby be substituted with carbamate groups. More specifically, the urea or the like, when heated, is decomposed into isocyanic acid and ammonia as shown by the reaction formula (1) below, and the isocyanic acid, which is highly reactive, is reacted with a hydroxyl group of cellulose to form a carbamate as shown by the reaction formula (2) below.

$$NH_2\text{-CO-}NH_2 \rightarrow \text{H-N=C=O} + NH_3 \ldots \qquad (1)$$

$$\text{Cell-OH} + \text{H-N=C=O} \rightarrow \text{Cell-O-CO-}NH_2 \ldots \qquad (2)$$

The lower limit of the heating temperature in the heating step is preferably 120 °C, more preferably 130°C, particularly preferably the melting point of urea (about 134 °C) or higher, still more preferably 140 °C, most preferably 150 °C. At a heating temperature of 120 °C or higher, carbamation proceeds efficiently. The upper limit of the heating temperature is preferably 200 °C, more preferably 180 °C, particularly preferably 170 °C. At a heating temperature over 200 °C, the cellulose raw material may decompose, which may lead to insufficient reinforcing effect.

The lower limit of duration of the heating in the heating step is preferably 1 minute, more preferably 5 minutes, particularly preferably 30 minutes, still more preferably 1 hour, most preferably 2 hours. With the heating for 1 minute or longer, the carbamation reaction may be ensured. On the other hand, the upper limit of duration of the heating is preferably 15 hours, more preferably 10 hours. The heating for over 15 hours is not economical, and sufficient carbamation may be effected in 15 hours.

The heat treatment discussed above is preferably performed under neutral conditions. Under the neutral conditions, the carbamation proceeds more securely, while damage to the cellulose fibers may be minimized, so that the reinforcing effect of the cellulose fibers when formed into a composite material together with a resin may further be improved. The upper pH limit of the mixture in the heating step is preferably 8, more preferably 7. The lower pH limit thereof is preferably 6, more preferably 7. The pH adjustment may be performed by adding to the mixture an acidic compound (for example, acetic acid or citric acid) or an alkaline compound (for example, sodium hydroxide or calcium hydroxide), or by other means.

For the heating in the heating step, for example, a hot air dryer, a paper machine, or a dry pulp machine may be used.

The lower limit of the degree of substitution of the hydroxyl groups of the cellulose raw material with carbamate groups is preferably 0.05, more preferably 0.1, particularly preferably 0.2. With a degree of substitution of 0.05 or higher, the effect obtained from the introduction of carbamate is ensured. The upper limit of the degree of substitution is preferably 1, more preferably 0.5, particularly preferably 0.4. In this regard, cellulose raw materials with a higher degree of substitution are expensive.

Here, cellulose is a polymer having anhydroglucose as a structural unit, wherein one structural unit includes three hydroxy groups. Accordingly, when all the hydroxy groups are substituted with carbamate groups, the degree of substitution is 3.

(Washing)

Next, the carbamate-modified cellulose is washed prior to defibration.

Specifically, the carbamate-modified cellulose is washed by being diluted with a solvent or the like, followed by stirring and then dewatering. Through such washing, byproducts and unreacted substances are washed out, and lowering of fracture strain of the resulting fibrous cellulose composite resin may be reduced.

Washing of cellulose fibers may be performed using, for example, water or organic solvents. When water is used, cellulose fibers are diluted to a solid concentration of preferably 0.1 % or higher and less than 25%, more preferably

1 % or higher and less than 10 %, particularly preferably 2 % or higher and less than 5 %. At a solid concentration of 25 % or higher, sufficient washing may not be carried out and residual urea and byproducts may not be washed out, so that lowering of fracture strain may not be reduced sufficiently. On the other hand, dilution to a solid concentration of less than 0.1 % is sufficient for washing, but may require a large amount of energy in the subsequent dewatering step.

The cellulose fibers may be dewatered by selecting and using one or more dehydrators selected from the group consisting of, for example, belt presses, screw presses, filter presses, twin rolls, twin wire formers, valveless filters, center disk filters, film treatment units, and centrifuges.

The amount of residual urea (remaining amount of urea) in the carbamate-modified cellulose after the washing is preferably 10 % or less, more preferably 1 % or less, particularly preferably 0%, with respect to 100 parts by mass of the carbamate-modified cellulose. With the amount of residual urea over 10 %, the urea may remain in the resin as a foreign matter, which may be the starting points of cracking upon distortion by stress and may cause easy cracking, leading to likely lowering of bending strain.

The amount of the byproducts generated in the carbamate modification is preferably 10 % or less, more preferably 1 % or less, particularly preferably 0 %, with respect to 100 parts by mass of the carbamate-modified cellulose. With the amount of the byproducts over 10 %, the byproducts may remain in the resin as foreign matters, which may be the starting points of cracking upon distortion by stress and may cause easy cracking, leading to likely lowering of bending strain.

Here, the byproducts are compounds generated during carbamate modification of cellulose with urea, and are compounds eluted by washing the reaction product obtained by carbamate-modification reaction of urea and cellulose. Such byproducts may be, for example, biuret and cyanuric acid.

(Defibration)

The carbamate-modified cellulose thus washed is defibrated, to thereby obtain a dispersion liquid of carbamate-modified microfiber cellulose. As a result of this defibration, the resin composition according to this embodiment is made to contain (use) fine fiber, i.e., microfiber cellulose (microfibrillated cellulose), as part or all of the fibrous cellulose. With the use of the microfiber cellulose, the reinforcing effect on resins is significantly enhanced.

According to the present embodiment, microfiber cellulose refers to fibers having a thicker average fiber diameter than that of cellulose nanofibers. Specifically, the average fiber diameter of microfiber cellulose is, for example, 0.1 to 15 μm, preferably 0.2 to 10 μm. Microfiber cellulose having an average fiber diameter below (less than) 0.1 μm is no different from cellulose nanofibers, and sufficient enhancing effect on resin strength (particularly flexural modulus) may not be obtained. Further, the defibration time is prolonged, which requires considerable energy. In addition, dewaterability of cellulose fiber slurry is deteriorated, which necessitates considerable energy for drying. Spending considerable energy for drying results in thermal deterioration of microfiber cellulose, which may lead to degradation in strength. On the other hand, microfiber cellulose having an average fiber diameter over (more than) 15 μm is no different from pulp, and sufficient reinforcing effect may not be achieved.

The carbamate-modified cellulose may be pretreated by a chemical method prior to defibration. Such pretreatment by a chemical method may be, for example, hydrolysis of polysaccharides with acid (acid treatment), hydrolysis of polysaccharides with enzyme (enzyme treatment), swelling of polysaccharides with alkali (alkali treatment), oxidation of polysaccharides with an oxidizing agent (oxidation treatment), or reduction of polysaccharides with a reducing agent (reduction treatment). Among these, as a pretreatment by a chemical method, enzyme treatment is preferred, and more preferred is one or more treatments selected from acid treatment, alkali treatment, and oxidation treatment, in addition to the enzyme treatment. The enzyme treatment is discussed in detail below.

As an enzyme used in the enzyme treatment, preferably at least one of, more preferably both of cellulase enzymes and hemicellulase enzymes are used. With such enzymes, defibration of the carbamate-modified cellulose is more facilitated. It is noted that cellulase enzymes cause decomposition of cellulose in the presence of water, whereas hemicellulase enzymes cause decomposition of hemicellulose in the presence of water.

The cellulase enzymes may be enzymes produced by, for example, the genus Trichoderma (filamentous fungus), the genus Acremonium (filamentous fungus), the genus Aspergillus (filamentous fungus), the genus Phanerochaete (basidiomycete), the genus Trametes (basidiomycete), the genus Humicola (filamentous fungus), the genus Bacillus (bacteria), the genus Schizophyllum (bacteria), the genus Streptomyces (bacteria), and the genus Pseudomonas (bacteria). These cellulase enzymes are available as reagents or commercial products. Examples of the commercial products may include, for example, Cellulosin T2 (manufactured by HBI ENZYMES INC.), Meicelase (manufactured by MEIJI SEIKA PHARMA CO., LTD.), Novozyme 188 (manufactured by NOVOZYMES), Multifect CX10L (manufactured by GENENCOR), and cellulase enzyme GC220 (manufactured by

GENENCOR).

The cellulase enzymes may also be either EG (endoglucanase) or CBH (cellobiohydrolase). EG and CBH may be used alone or in mixture, or further in mixture with hemicellulase enzymes.

The hemicellulase enzymes may be, for example, xylanase, which decomposes xylan; mannase, which decomposes mannan; and arabanase, which decomposes araban. Pectinase, which decomposes pectin, may also be used.

Hemicellulose is a polysaccharide other than pectin, which is present between cellulose microfibrils of plant cell walls. Hemicellulose has wide varieties and varies depending on the kinds of wood and among cell wall layers. Glucomannan is a major component in the secondary walls of softwood, whereas 4-O-methylglucuronoxylan is a major component in the secondary walls of hardwood. Thus, use of mannase is preferred for obtaining fine fibers from softwood bleached kraft pulp (NBKP), whereas use of xylanase is preferred for obtaining fine fibers from hardwood bleached kraft pulp (LBKP).

The amount of the enzyme to be added with respect to the amount of the carbamate-modified cellulose may depend on, for example, the kind of enzyme, the kind of wood (either softwood or hardwood) used as a raw material, or the kind of mechanical pulp. The amount of the enzyme to be added may preferably be 0.1 to 3 mass%, more preferably 0.3 to 2.5 mass%, particularly preferably 0.5 to 2 mass%, of the amount of the carbamate-modified cellulose. With the amount of the enzyme below 0.1 mass%, sufficient effect due the addition of the enzyme may not be obtained. With the amount of the enzyme over 3 mass%, the cellulose may be saccharified to lower the yield of the fine fibers. A problem also resides in that improvement in effect worth the increased amount to be added may not be observed.

When a cellulase enzyme is used as the enzyme, the enzyme treatment is preferably carried out at a pH in a weakly acidic region (pH = 3.0 to 6.9) in view of the enzymatic reactivity. On the other hand, when a hemicellulase enzyme is used as the enzyme, the enzyme treatment is preferably carried out at a pH in a weakly alkaline region (pH = 7.1 to 10.0).

Whether a cellulase enzyme or a hemicellulase enzyme is used, the enzyme treatment is carried out at a temperature of preferably 30 to 70 °C, more preferably 35 to 65 °C, particularly preferably 40 to 60 °C. At a temperature of 30 °C or higher, the enzymatic activity is hard to be lowered, and prolongation of the treatment time may be avoided. At a temperature of 70 °C or lower, enzyme inactivation may be avoided.

The duration of the enzyme treatment may depend on, for example, the type of the enzyme, the temperature in the enzyme treatment, and the pH in the enzyme treatment. Generally, the duration of the enzyme treatment is 0.5 to 24 hours.

After the enzyme treatment, it is preferred to inactivate the enzyme. Inactivation of enzymes may be effected by, for example, addition of an alkaline aqueous solution (preferably at pH 10 or higher, more preferably at pH 11 or higher) or addition of 80 to 100 °C hot water.

Next, the alkali treatment is discussed.

An alkali treatment prior to the defibration causes partial dissociation of hydroxyl groups in hemicellulose or cellulose in pulp, resulting in anionization of the molecules, which weakens intra- and intermolecular hydrogen bonds to promote dispersion of carbamate-modified cellulose during the defibration.

As the alkali used in the alkali treatment, for example, sodium hydroxide, lithium hydroxide, potassium hydroxide, an aqueous ammonia solution, or organic alkali, such as tetramethylammonium hydroxide, tetraethylammonium hydroxide, tetrabutylammonium hydroxide, and benzyltrimethylammonium hydroxide may be used. In view of the manufacturing cost, sodium hydroxide is preferably used.

The enzyme treatment, acid treatment, or oxidation treatment prior to the defibration may result in a low water retention degree, a high degree of crystallinity, and also high homogeneity of the microfiber cellulose. In this regard, microfiber cellulose at a low water retention degree is easily dewatered, so that dewaterability of a cellulose fiber slurry may be improved.

The enzyme treatment, acid treatment, or oxidation treatment of the raw material pulp causes decomposition of the amorphous region of hemicellulose and cellulose in pulp, which leads to reduction of energy required for the defibration and to improvement in uniformity and dispersibility of the cellulose fibers. The pretreatment, however, lowers the aspect ratio of microfiber cellulose, and it is thus preferred to avoid excessive pretreatment for the purpose of obtaining a reinforcing material for resins.

The defibration of the carbamate-modified cellulose may be performed by beating the raw material pulp in, for example, beaters, homogenizers, such as high-pressure homogenizers and high-pressure homogenizing apparatus, millstone friction machines, such as grinders and mills, single-screw kneaders, multi-screw kneaders, kneaders, refiners, and jet mills. It is preferred to use refiners or jet mills.

The average fiber length (average length of single fibers) of the microfiber cellulose is preferably 0.02 to 2.0 mm, more preferably 0.05 to 1.5 mm, particularly preferably 0.1 to 1.0 mm. With an average fiber length below 0.02 mm, the microfiber cellulose may not be able to form three dimensional networks among them, resulting in poor reinforcing effect on resins. With an average fiber length over 2.0 mm, the length of the microfiber cellulose differs nothing from

that of the raw material pulp, so that the reinforcing effect may not be sufficient.

The average fiber length of the microfiber cellulose may be adjusted by, for example, selection, pretreatment, or defibration of the raw material pulp.

Preferably 20 % or more, more preferably 40 % or more, particularly preferably 60 % or more of the microfiber cellulose have a fiber length of 0.2 mm or shorter. Below 20 %, sufficient reinforcing effect on resins may not be obtained. On the other hand, there is no upper limit of the percentage of the microfiber cellulose having a fiber length of 0.2 mm or shorter, and all of the microfiber cellulose may have a fiber length of 0.2 mm or shorter.

The aspect ratio of the microfiber cellulose is preferably 2 to 15000, more preferably 10 to 10000. With an aspect ratio below 2, the microfiber cellulose may not be able to form three dimensional networks among them, resulting in poor reinforcing effect. With an aspect ratio over 15000, the microfiber cellulose tends to be highly entangled, which may lead to insufficient dispersion in the resin.

The percentage of fibrillation of the microfiber cellulose is preferably 1.0 to 30.0 %, more preferably 1.5 to 20.0 %, particularly preferably 2.0 to 15.0 %. With a percentage of fibrillation over 30.0 %, the area of contact with water is too large, which may make the dewatering difficult even when the defibration results in the average fiber width within a range of 0.1 μm or larger. With a percentage of fibrillation below 1.0 %, the hydrogen bonding among the fibrils may be too little to form firm three dimensional networks.

The degree of crystallinity of the microfiber cellulose is preferably 50 % or higher, more preferably 55 % or higher, particularly preferably 60 % or higher. With a degree of crystallinity below 50 %, the mixability with pulp or cellulose nanofibers may be improved, whereas the strength of the fibers per se may be lowered to make it difficult to improve the strength of resins. On the other hand, the degree of crystallinity of the microfiber cellulose is preferably 95 % or lower, more preferably 90 % or lower, particularly preferably 85 % or lower. With a degree of crystallinity over 95 %, the ratio of firm hydrogen bonding within the molecules is high, which makes the fibers themselves rigid and impairs dispersibility.

The degree of crystallinity of the microfiber cellulose may arbitrarily be adjusted by, for example, selection, pretreatment, or defibration of the raw material pulp.

The pulp viscosity of the microfiber cellulose is preferably 2 cps or higher, more preferably 4 cps or higher. With a pulp viscosity of the microfiber cellulose below 2 cps, control of aggregation of the microfiber cellulose may be difficult.

The freeness of the microfiber cellulose is preferably 500 ml or less, more preferably 300 ml or less, particularly preferably 100 ml or less. With a freeness of the microfiber cellulose over 500 ml, the average fiber diameter of the microfiber cellulose exceeds 10 μm, and sufficient effect to improve resin strength may not be obtained.

The zeta potential of the microfiber cellulose is preferably -150 to 20 mV, more preferably -100 to 0 mV, particularly preferably -80 to -10 mV. With a zeta potential below -150 mV, compatibility with resins may significantly be deteriorated, resulting in insufficient reinforcing effect. With a zeta potential over 20 mV, dispersion stability may be impaired.

The water retention degree of the microfiber cellulose is preferably 80 to 400 %, more preferably 90 to 350 %, particularly preferably 100 to 300 %. A water retention degree of the microfiber cellulose below 80 % differs nothing with that of the raw material pulp, so that the reinforcing effect may be insufficient. With a water retention degree over 400 %, dewaterability tends to be poor, and the microfiber cellulose tends to aggregate. In this regard, the water retention degree of the microfiber cellulose may be made still lower by the substitution of its hydroxy groups with carbamate groups, which improves dewaterability and drying property.

The water retention degree of the microfiber cellulose may arbitrarily be adjusted by, for example, selection, pretreatment, or defibration of the raw material pulp.

The content of the microfiber cellulose in the cellulose fibers (fibrous cellulose) is preferably 60 to 100 mass%, more preferably 70 to 99 mass%, particularly preferably 80 to 98 mass%. With a content of the microfiber cellulose below 60 mass%, sufficient reinforcing effect may not be obtained. Further with a content of the microfiber cellulose below 60 mass%, the contents of pulp and cellulose nanofibers are proportionally higher, so that the effect obtained from containing the microfiber cellulose may not be achieved.

The microfiber cellulose according to the present embodiment has carbamate groups. In other words, the microfiber cellulose has carbamate (esters of carbamic acid) introduced. A carbamate group is denoted as -O-CO-NH-, and may be, for example, $-O-CO-NH_2$, -O-CONHR, or $-O-CO-NR_2$. That is, a carbamate group may be represented by the following structural formula (1):

[Formula 1]

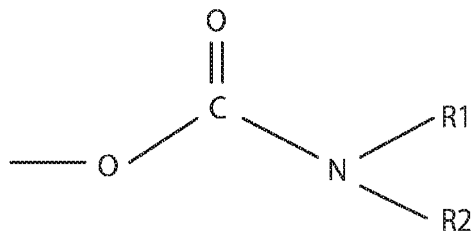

In the formula, R is independently at least any of a saturated straight chain hydrocarbon group, a saturated branched hydrocarbon group, a saturated cyclic hydrocarbon group, an unsaturated straight chain hydrocarbon group, an unsaturated branched hydrocarbon group, an aromatic group, and derivative groups thereof.

The saturated straight chain hydrocarbon group may be, for example, a straight chain alkyl group having 1 to 10 carbon atoms, such as a methyl group, an ethyl group, or a propyl group.

The saturated branched hydrocarbon group may be, for example, a branched alkyl group having 3 to 10 carbon atoms, such as an isopropyl group, a sec-butyl group, an isobutyl group, or a tert-butyl group.

The saturated cyclic hydrocarbon group may be, for example, a cycloalkyl group, such as a cyclopentyl group, a cyclohexyl group, or a norbornyl group.

The unsaturated straight chain hydrocarbon group may be, for example, a straight chain alkenyl group having 2 to 10 carbon atoms, such as an ethenyl group, a propene-1-yl group, or a propene-3-yl group, or a straight chain alkynyl group having 2 to 10 carbon atoms, such as an ethynyl group, a propyn-1-yl group, or a propyn-3-yl group.

The unsaturated branched hydrocarbon group may be, for example, a branched alkenyl group having 3 to 10 carbon atoms, such as a propene-2-yl group, a butene-2-yl group, or a butene-3-yl group, or a branched alkynyl group having 4 to 10 carbon atoms, such as a butyne-3-yl group.

The aromatic group may be, for example, a phenyl group, a tolyl group, a xylyl group, or a naphthyl group.

The derivative groups may be a saturated straight chain hydrocarbon group, a saturated branched hydrocarbon group, a saturated cyclic hydrocarbon group, an unsaturated straight chain hydrocarbon group, an unsaturated branched hydrocarbon group, or an aromatic group, in which one or a plurality of hydrogen atoms thereof is substituted with a substituent (for example, a hydroxy group, a carboxy group, or a halogen atom).

In the microfiber cellulose having carbamate groups (having carbamate introduced), part or all of the highly polar hydroxy groups have been substituted with relatively less polar carbamate groups. Thus, such microfiber cellulose has low hydrophilicity and high affinity to resins having lower polarity. As a result, the microfiber cellulose has excellent homogeneous dispersibility in the resin. Further, a slurry of the microfiber cellulose has a low viscosity and good handling property.

(Cellulose nanofibers)

According to the present embodiment, cellulose nanofibers may be contained in the composite resin as the fibrous cellulose, together with the microfiber cellulose. Cellulose nanofibers are fine fibers, like microfiber cellulose, and have a role to complement the microfiber cellulose in enhancing the strength of resins. However, the fine fibers are preferably only the microfiber cellulose without cellulose nanofibers, where possible. In case cellulose nanofibers are contained, the following cellulose nanofibers are preferred.

First, cellulose nanofibers may be obtained by defibration (making finer) of raw material pulp (cellulose raw material). The raw material pulp may be and preferably be the same as those for the microfiber cellulose.

The raw material pulp for cellulose nanofibers may be pretreated and defibrated in the same manner as for the microfiber cellulose. However, the degree of defibration is different, and it is required to perform the defibration so that the average fiber diameter falls, for example, below 0.1 μm. Explanations will be made below mainly on the differences from the microfiber cellulose.

The average fiber diameter (average fiber width, or average of diameters of single fibers) of the cellulose nanofibers is preferably 4 to 100 nm, more preferably 10 to 80 nm. With an average fiber diameter of the cellulose nanofibers below 4 nm, the dewaterability may be low. Further, when the cellulose nanofibers are mixed with a dispersant, the dispersant may not sufficiently cover (not sufficiently cling to) the cellulose nanofibers, resulting in insufficient improvement in dispersibility. On the other hand, with an average fiber diameter over 100 nm, the cellulose nanofibers are no longer cellulose nanofibers.

The average fiber diameter of the cellulose nanofibers may be adjusted by, for example, selection, pretreatment, or defibration of the raw material pulp.

The average fiber length (lengths of single fibers) of the cellulose nanofibers is preferably 0.1 to 1000 μm, more preferably 0.5 to 500 μm. With an average fiber length below 0.1 μm, the cellulose nanofibers may not be able to form three dimensional networks among them, resulting in insufficient reinforcing effect. With an average fiber length over 1000 μm, the cellulose nanofibers tend to be entangled, and dispersibility may not be improved sufficiently.

The average fiber length of the cellulose nanofibers may be adjusted by, for example, selection, pretreatment, or defibration of the raw material pulp.

The degree of crystallinity of the cellulose nanofibers is preferably 95 to 50 %, more preferably 90 to 60 %. With the degree of crystallinity of the cellulose nanofibers within the above range, the resin strength is securely improved.

The degree of crystallinity may arbitrarily be adjusted by, for example, selection, pretreatment, or defibration of the raw material pulp.

The pulp viscosity of the cellulose nanofibers is preferably 1.0 cps or higher, more preferably 2.0 cps or higher. The pulp viscosity is a viscosity of a solution of cellulose dissolved in a copper-ethylenediamine solution, and a higher pulp viscosity indicates higher degree of polymerization of cellulose. With the pulp viscosity of 1.0 cps or higher, dewaterability may be imparted to the slurry while decomposition of the cellulose nanofibers during kneading with a resin may be suppressed, to thereby achieve sufficient reinforcing effect.

The cellulose nanofibers obtained by the defibration may be dispersed in an aqueous medium and kept in the form of a dispersion, as needed, prior to mixing with other cellulose fibers. It is particularly preferred that the aqueous medium is entirely water (aqueous solution). However, part of the aqueous medium may be another liquid compatible with water. Such another liquid may be, for example, a lower alcohol having 3 or less carbon atoms.

The B-type viscosity of the dispersion of the cellulose nanofibers (1 % concentration) is preferably 10 to 2000 cp, more preferably 30 to 1500 cp. With the B-type viscosity of the dispersion within the above range, mixing with other cellulose fibers may be facilitated, and the dewaterability of the cellulose fiber slurry may be improved.

The content percentage of the cellulose nanofibers in the cellulose fibers is preferably 40 mass% or less, more preferably 20 mass% or less. With the content percentage over 40 mass%, the cellulose nanofibers may firmly aggregate and may not be dispersed in resins, providing insufficient reinforcing effect. As discussed above, it is most preferred that the cellulose nanofibers are not contained, that is, at a content percentage of 0 mass%.

The cellulose nanofibers may be carbamated in the same manner as for the microfiber cellulose, or the like, as needed.

(Pulp)

The fibrous cellulose may contain pulp, in addition to the microfiber cellulose. Pulp has a role to remarkably improve the dewaterability of a cellulose fiber slurry. It is preferred, however, that the content percentage of the pulp is within a prescribed range (see below).

The content percentage of the pulp in the cellulose fibers is preferably 40 mass% or lower, more preferably 20 mass% or lower. A content percentage of the pulp over 40 mass% results in decrease in the content percentage of the microfiber cellulose, so that the resin strength may not be secured. Like the cellulose nanofibers, it is most preferred that the pulp is also not contained, that is, at a content percentage of 0 mass%.

The pulp may be the same as the raw material pulp for the microfiber cellulose or the like, and may preferably be the same as the raw material pulp for the microfiber cellulose. As the pulp, use of the same material as the raw material pulp for the microfiber cellulose may improve the affinity of the cellulose fibers, to thereby improve the homogeneity of the cellulose fiber slurry.

(Dispersion)

The fibrous cellulose containing the fine fibers is dispersed in an aqueous medium to prepare a dispersion (slurry) (dispersion of the carbamate-modified microfiber cellulose), as needed. The aqueous medium is particularly preferably water in its entirety, but aqueous medium partly containing another liquid compatible with water may also be used. Such another liquid may be, for example, a lower alcohol having 3 or less carbon atoms.

The solid concentration of the slurry is preferably 0.1 to 10.0 mass%, more preferably 0.5 to 5.0 mass%. With a solid concentration below 0.1 mass%, an excessive amount of energy may be required for dewatering and drying. With a solid concentration over 10.0 mass%, fluidity of the slurry per se may be too low to homogeneously admix with the dispersant.

(Acid-modified resin)

The dispersion of the carbamate-modified microfiber cellulose is mixed with an acid-modified resin, and concentrated into a material containing carbamate-modified microfiber cellulose. The acid-modified resin has acidic groups,

which may be ionically bonded to part or all of the carbamate groups. By this ionic bonding, the reinforcing effect on resins is improved.

The acid-modified resin may be, for example, acid-modified polyolefin resins, acid-modified epoxy resins, or acid-modified styrene elastomer resins. It is preferred to use acid-modified polyolefin resins. An acid-modified polyolefin resin is a copolymer of an unsaturated carboxylic acid component and a polyolefin component.

As the polyolefin component, one or more polymers of alkenes selected a from the group consisting of, for example, ethylene, propylene, butadiene, and isoprene may be used. Preferably, use of a polypropylene resin, which is a polymer of propylene, is preferred.

As the unsaturated carboxylic acid component, one or more members may be selected and used from the group consisting of, for example, maleic anhydrides, phthalic anhydrides, itaconic anhydrides, citraconic anhydrides, and citric anhydrides. Preferably, use of maleic anhydrides is preferred. In other words, use of maleic anhydride-modified polypropylene resins is preferred.

The amount of the acid-modified resin to be added is preferably 0.1 to 1000 parts by mass, more preferably 1 to 500 parts by mass, particularly preferably 10 to 200 parts by mass, based on 100 parts by mass of the microfiber cellulose. In particular, when the acid-modified resin is a maleic anhydride-modified polypropylene resin, the amount to be added is preferably 1 to 200 parts by mass, more preferably 10 to 100 parts by mass. With an amount of the acid-modified resin to be added below 0.1 parts by mass, improvement in strength is not sufficient. An amount to be added over 1000 parts by mass is excessive and tends to lower the strength.

The weight average molecular weight of the maleic anhydride-modified polypropylene is, for example, 1000 to 100000, preferably 3000 to 50000.

The acid value of the maleic anhydride-modified polypropylene is preferably 0.5 mgKOH/g or more and 100 mgKOH/g or less, more preferably 1 mgKOH/g or more and 50 mgKOH/g or less.

(Dispersant)

The fibrous cellulose containing the microfiber cellulose and the like is more preferably mixed with a dispersant. As the dispersant, compounds having an amine group and/or a hydroxyl group in aromatics and compounds having an amine group and/or a hydroxyl group in aliphatics are preferred.

Examples of the compounds having an amine group and/or a hydroxyl group in aromatics may include anilines, toluidines, trimethylanilines, anisidines, tyramines, histamines, tryptamines, phenols, dibutylhydroxytoluenes, bisphenol A's, cresols, eugenols, gallic acids, guaiacols, picric acids, phenolphthaleins, serotonins, dopamines, adrenalines, noradrenalines, thymols, tyrosines, salicylic acids, methyl salicylates, anisyl alcohols, salicyl alcohols, sinapyl alcohols, difenidols, diphenylmethanols, cinnamyl alcohols, scopolamines, triptophols, vanillyl alcohols, 3-phenyl-1-propanols, phenethyl alcohols, phenoxyethanols, veratryl alcohols, benzyl alcohols, benzoins, mandelic acids, mandelonitriles, benzoic acids, phthalic acids, isophthalic acids, terephthalic acids, mellitic acids, and cinnamic acids.

Examples of the compounds having an amine group and/or a hydroxyl group in aliphatics may include capryl alcohols, 2-ethylhexanols, pelargonic alcohols, capric alcohols, undecyl alcohols, lauryl alcohols, tridecyl alcohols, myristyl alcohols, pentadecyl alcohols, cetanols, stearyl alcohols, elaidyl alcohols, oleyl alcohols, linoleyl alcohols, methylamines, dimethylamines, trimethylamines, ethylamines, diethylamines, ethylenediamines, triethanolamines, N,N-diisopropylethylamines, tetramethylethylenediamines, hexamethylenediamines, spermidines, spermines, amantadines, formic acids, acetic acids, propionic acids, butyric acids, valeric acids, caproic acids, enanthic acids, caprylic acids, pelargonic acids, capric acids, lauric acids, myristic acids, palmitic acids, margaric acids, stearic acids, oleic acids, linolic acids, linoleic acids, arachidonic acids, eicosapentaenoic acids, docosahexaenoic acids, and sorbic acids.

The dispersants mentioned above block the hydrogen bonding among the microfiber cellulose molecules. Consequently, the microfiber cellulose, in kneading with a resin, is reliably dispersed (redispersed) in the resin. Further, the dispersants mentioned above also have a role to improve the compatibility of the microfiber cellulose and the resin. In this regard, the dispersibility of the microfiber cellulose in the resin is improved.

It is conceivable, in kneading the fibrous cellulose and the resin, to add a separate compatibilizer (agent), but mixing the fibrous cellulose and the dispersant (agent) in advance, rather than adding the agent at this stage, results in more uniform clinging of the agent over the fibrous cellulose, to thereby enhance the effect to improve compatibility with the resin.

In addition, as the melting point of polypropylene, for example, is 160 °C, the fibrous cellulose and the resin are kneaded at about 180 °C. In this state, the dispersant (liquid), if added, will be dried instantaneously. In this regard, there is known to prepare a masterbatch (a composite resin containing a high concentration of microfiber cellulose) using a resin with a lower melting point, and then adding a resin with an ordinary melting point to the masterbatch to lower the concentration of the microfiber cellulose in the resin. However, since resins with a lower melting point are generally lower in strength, the strength of the composite resin may be lower according to this method.

The amount of the dispersant to be mixed is preferably 0.1 to 1000 parts by mass, more preferably 1 to 500

parts by mass, particularly preferably 10 to 200 parts by mass, based on 100 parts by mass of the microfiber cellulose. With an amount of the dispersant to be added below 0.1 parts by mass, improvement in strength may not be sufficient. An amount of the dispersant to be added over 1000 parts by mass is excessive and tends to lower the strength.

It is assumed that the acid-modified resin, which has the acidic groups ionically bonded with the carbamate groups to improve the compatibility and the reinforcing effect, has a large molecular weight and thus blends well with the resin, contributing to the improvement in strength. On the other hand, the dispersant mentioned above is interposed between the hydroxyl groups of the microfiber cellulose to prevent aggregation, and thus improves the dispersibility in the resin. Further, the dispersant has a lower molecular weight than that of the acid-modified resin, and thus can enter the narrow space among the cellulose fibers, where the acid-modified resin cannot enter, to play a role to improve the dispersibility and thus the strength. In view of the above, it is preferred that the molecular weight of the acid-modified resin is 2 to 2000 times, preferably 5 to 1000 times the molecular weight of the dispersant.

This point is discussed in more detail. Resin powder is physically interposed among the cellulose fibers to block the hydrogen bonding, thereby improving the dispersibility of the cellulose fibers. On the other hand, the acid-modified resin improves the compatibility by ionically bonding its acidic groups with the carbamate groups of the cellulose fibers, to thereby enhance the reinforcing effect. Here, the dispersant has the same function to block the hydrogen bonding among the cellulose fibers, while the resin powder, which is on the micrometer order, is physically interposed to interfere with the hydrogen bonding. Accordingly, though the dispersibility is lower than that of the dispersant, the resin powder per se is molten to form a matrix, and thus does not contribute to deterioration of the physical properties. In contrast, the dispersant, which is on the molecular level and extremely small, covers the cellulose fibers to block the hydrogen bonding, which results in higher efficacy in improving dispersibility of the cellulose fibers. However, the dispersant may remain in the resin and contribute to deterioration of the physical properties.

(Kneading with resin)

The material containing the carbamate-modified microfiber cellulose (fibrous cellulose) is kneaded with a resin to obtain a fibrous cellulose composite resin. The mixture of the fibrous cellulose and the acid-modified resin as well as the dispersant and the like, may be dried and ground into a powdered product prior to kneading with the resin. In this form, no drying of the fibrous cellulose is needed for kneading with the resin, which is thermally efficient. Further, when the dispersant is already mixed in the mixture, the fine fibers including the microfiber cellulose and the like are less likely to be unredispersible even after the mixture is dried.

The mixture is dehydrated into a dehydrated product, as needed, prior to the drying. For the dehydration, one or more dehydrators may be selected and used from the group consisting of, for example, belt presses, screw presses, filter presses, twin rolls, twin wire formers, valveless filters, center disk filters, film treatment units, and centrifuges.

For drying the mixture, one or more means may be selected and used from the group consisting of, for example, rotary kiln drying, disk drying, air flow drying, medium fluidized drying, spray drying, drum drying, screw conveyor drying, paddle drying, single-screw kneading drying, multi-screw kneading drying, vacuum drying, and stirring drying.

The dried mixture (dried product) is pulverized into a powdered product. For pulverizing the dried product, one or more means may be selected and used from the group consisting of, for example, bead mills, kneaders, dispersers, twist mills, cut mills, and hammer mills.

The average particle size of the powdered product is preferably 1 to 10000 μm, more preferably 10 to 5000 μm, particularly preferably 100 to 1000 μm. With an average particle size over 10000 μm, the powdered product may have inferior kneadability with the resin. On the other hand, making the average particle size of the powdered product smaller than 1 μm requires a high amount of energy, which is not economical.

The average particle size of the powdered product may be controlled by regulating the degree of pulverization, or by classification in classification apparatus, such as filters or cyclones.

The bulk specific gravity of the mixture (powdered product) is preferably 0.03 to 1.0, more preferably 0.04 to 0.9, particularly preferably 0.05 to 0.8. A bulk specific gravity exceeding 1.0 means the hydrogen bonding among the molecules of the fibrous cellulose being still firmer, so that dispersion in the resin is not easy. A bulk specific gravity less than 0.03 is disadvantageous in view of transportation cost.

The bulk specific gravity is a value determined in accordance with JIS K7365.

The moisture percentage of the mixture (powdered product) is preferably 50 % or lower, more preferably 30 % or lower, particularly preferably 10 % or lower. With a moisture percentage over 50 %, a significant amount of energy is required for kneading with the resin, which is not economical.

The moisture percentage is a value determined by holding a sample at 105 °C for 6 hours or longer in a constant temperature dryer until fluctuation in mass is not observed and measuring the mass as a mass after drying, and calculated by the following formula:

$$\text{Moisture percentage of fibers (\%)} = [(\text{mass before drying} - \text{mass after drying}) / \text{mass before drying}] \times 100$$

The microfiber cellulose thus dehydrated and dried may contain a resin. The resin, when contained, blocks the hydrogen bonding among the molecules of the dehydrated, dried microfiber cellulose to improve the dispersibility in the resin during the kneading.

The resin to be contained in the dehydrated, dried microfiber cellulose may be in the form of, for example, powder, pellets, or sheets, with the powder (powdered resin) being preferred.

When in the form of powder, the resin powder contained in the dehydrated, dried microfiber cellulose may have an average particle size of preferably 1 to 10000 μm, more preferably 10 to 5000 μm, particularly preferably 100 to 1000 μm. With an average particle size over 10000 μm, the particle size may be too large for the powder to enter the kneading apparatus. With an average particle size below 1 μm, the powder may be too fine to block the hydrogen bonding among the molecules of the microfiber cellulose. Incidentally, the resin to be used here, such as the powdered resin, may be of the same kind as or different from the resin to be kneaded with the microfiber cellulose (the resin as a main raw material), but the same kind is preferred.

The resin powder with an average particle size of 1 to 10000 μm is preferably mixed in an aqueous dispersion state prior to the dehydration and drying. By mixing in an aqueous dispersion state, the resin powder may be dispersed homogeneously among the fibers of the microfiber cellulose, resulting in homogeneous dispersion of the microfiber cellulose in the composite resin obtained from the kneading, to thereby further improve the strength properties.

The powdered product thus obtained (reinforcing material for resins) is kneaded with a resin, to thereby obtain a fibrous cellulose composite resin. The kneading may be performed by, for example, mixing the resin in the form of pellets with the powdered product, or by first melting the resin to obtain a molten product and then mixing the powdered product into the molten product. The acid-modified resin, the dispersant, and the like may be added at this stage.

For the kneading treatment, one or more members may be selected and used from the group consisting of, for example, single-screw or multi-screw (with two or more screws) kneaders, mixing rolls, kneaders, roll mills, Banbury mixers, screw presses, and dispersers. Among these, multi-screw kneaders with two or more screws are preferably used. Two or more multi-screw kneaders with two or more screws, arranged in parallel or in series, may also be used.

The peripheral speed of the screws of the multi-screw kneaders with two or more screws may be preferably 0.2 to 200 m/min, more preferably 0.5 to 150 m/min, particularly preferably 1 to 100 m/min. At a peripheral speed below 0.2 m/min, the microfiber cellulose may not be successfully dispersed in the resin. At a peripheral speed over 200 m/min, the shearing force applied to the microfiber cellulose may be excessive, so that the reinforcing effect may not be obtained.

In the kneader used in the present embodiment, the ratio of the screw diameter to the length of the kneading section is preferably 15 to 60. At a ratio below 15, the kneading section is so short that the microfiber cellulose and the resin may not be mixed. At a ratio over 60, the kneading section is so long that the shear load on the microfiber cellulose may be too high to provide the reinforcing effect.

The temperature for the kneading treatment is the glass transition temperature of the resin or higher and may depend on the type of the resin, and is preferably 80 to 280 °C, more preferably 90 to 260 °C, particularly preferably 100 to 240 °C.

As the resin, at least either one of a thermoplastic resin or a thermosetting resin may be used.

As a thermoplastic resin, one or more resins may be selected and used from the group consisting of, for example, polyolefins, such as polypropylene (PP) and polyethylene (PE), polyester resins, such as aliphatic polyester resins and aromatic polyester resins, polystyrenes, polyacrylic resins, such as methacrylates and acrylates, polyamide resins, polycarbonate resins, and polyacetal resins.

It is preferred, however, to use at least either one of polyolefins or polyester resins. Polyolefins may preferably be polypropylenes. Polyester resins may be aliphatic polyester resins, such as polylactic acid or polycaprolactone, or aromatic polyester resins, such as polyethylene terephthalate, and biodegradable polyester resins (also referred to simply as "biodegradable resins") may preferably be used.

As the biodegradable resin, one or more members may be selected and used from the group consisting of, for example, hydroxycarboxylic acid-based aliphatic polyesters, caprolactone-based aliphatic polyesters, and dibasic acid polyesters.

As the hydroxycarboxylic acid-based aliphatic polyester, one or more members may be selected and used from the group consisting of, for example, homopolymers of a hydroxycarboxylic acid, such as lactic acid, malic acid, glucose acid, or 3-hydroxybutyric acid, and copolymers using at least one of these hydroxycarboxylic acids. It is preferred to use polylactic acid, a copolymer of lactic acid and any of the hydroxycarboxylic acids other than lactic acid, polycaprolactone, or a copolymer of caprolactone and at least one of the hydroxycarboxylic acids, and particularly preferred to use polylactic acid.

The lactic acid may be, for example, L-lactic acid or D-lactic acid, and a single kind or a combination of two or more kinds of these lactic acids may be used.

As the caprolactone-based aliphatic polyester, one or more members may be selected and used from the group consisting of, for example, homopolymers of polycaprolactone, and copolymers of polycaprolactone or the like and any of the hydroxycarboxylic acids mentioned above.

As the dibasic acid polyester, one or more members may be selected and used from the group consisting of, for example, polybutylene succinates, polyethylene succinates, and polybutylene adipates.

A single kind alone or a combination of two or more kinds of the biodegradable resins may be used.

Examples of the thermosetting resins may include, for example, phenol resins, urea resins, melamine resins, furan resins, unsaturated polyesters, diallyl phthalate resins, vinyl ester resins, epoxy resins, polyurethane-based resins, silicone resins, and thermosetting polyimide-based resins. A single kind or a combination of two or more kinds of these resins may be used.

The resin may contain an inorganic filler, preferably at a rate that does not disadvantageously affect thermal recycling.

Examples of the inorganic filler may include, for example, simple substances of metal elements belonging to Groups I to VIII of the Periodic Table, such as Fe, Na, K, Cu, Mg, Ca, Zn, Ba, Al, Ti, or a silicon element; oxides thereof, hydroxides thereof, carbonates thereof, sulfates thereof, silicates thereof, or sulfites thereof; and various clay minerals formed of these compounds.

Specific examples of the inorganic filler may include, for example, barium sulfate, calcium sulfate, magnesium sulfate, sodium sulfate, calcium sulfite, zinc oxide, silica, heavy calcium carbonate, light calcium carbonate, aluminum borate, alumina, iron oxide, calcium titanate, aluminum hydroxide, magnesium hydroxide, calcium hydroxide, sodium hydroxide, magnesium carbonate, calcium silicate, clay wollastonite, glass beads, glass powder, silica sand, silica stone, quartz powder, diatomaceous earth, white carbon, and glass fibers. A plurality of these inorganic fillers may be contained. An inorganic filler contained in de-inked pulp may also be used.

The mixing ratio of the fibrous cellulose and the resin is preferably 1 part by mass or more of the fibrous cellulose to 99 parts by mass or less of the resin, more preferably 2 parts by mass or more of the fibrous cellulose to 98 parts by mass or less of the resin, particularly preferably 3 parts by mass or more of the fibrous cellulose to 97 parts by mass or less of the resin. Further, the ratio is preferably 50 parts by mass or less of the fibrous cellulose to 50 parts by mass or more of the resin, more preferably 40 parts by mass or less of the fibrous cellulose to 60 parts by mass or more of the resin, particularly preferably 30 parts by mass or less of the fibrous cellulose to 70 parts by mass or more of the resin. Particularly, with 10 to 50 parts by mass of the fibrous cellulose, the strength, in particular the bending strength and the tensile elastic modulus, of the resin composition may significantly be improved.

It is noted that the ratio of the fibrous cellulose and the resin contained in the eventually obtained resin composition is usually the same as the mixing ratio of the fibrous cellulose and the resin mentioned above.

The difference in solubility parameter $(cal/cm^3)^{1/2}$ (SP value) between the microfiber cellulose and the resin, that is, supposing that the SP value of the microfiber cellulose is $SP_{MFC}$ value and the SP value of the resin is $SP_{POL}$ value, the difference in SP value may be obtained by the formula: Difference in SP value = $SP_{MFC}$ value - $SP_{POL}$ value. The difference in SP value is preferably 10 to 0.1, more preferably 8 to 0.5, particularly preferably 5 to 1. With a difference in SP value over 10, the microfiber cellulose is not dispersed in the resin, and thus the reinforcing effect may not be obtained. With a difference in SP value below 0.1, the microfiber cellulose is dissolved in the resin and does not function as a filler, so that the reinforcing effect cannot be obtained. In this regard, a smaller difference between the $SP_{POL}$ value of the resin (solvent) and the $SP_{MFC}$ value of the microfiber cellulose (solute) indicates higher reinforcing effect. It is noted that the solubility parameter $(cal/cm^3)^{1/2}$ (SP value) is a scale of solvent/solute intermolecular force, and a solvent and a solute having closer SP values results in higher solubility.

(Other components)

In addition to the fine fibers, pulp, and the like discussed above, the resin composition may contain or may be caused to contain fibers derived from plant materials obtained from various plants, such as kenaf, jute hemp, manila hemp, sisal hemp, ganpi, mitsumata, mulberry, banana, pineapple, coconut, corn, sugar cane, bagasse, palm, papyrus, reed, esparto, survival grass, wheat, rice, bamboo, various kinds of softwood (cedar, cypress, and the like), hardwood, and cotton.

In the resin composition, one or more members selected from the group consisting of, for example, antistatic agents, flame retardants, antibacterial agents, colorants, radical scavengers, and foaming agents may be added without disturbing the effects of the present invention. These materials may be added to the dispersion of the fibrous cellulose, added while the fibrous cellulose and the resin are kneaded, added to the resulting kneaded product, or added otherwise. In view of the manufacturing efficiency, those materials may preferably be added while the fibrous cellulose and the resin are kneaded.

The resin composition may contain, as a rubber component, ethylene/α-olefin copolymer elastomers or styrene-butadiene block copolymers. Examples of α-olefins may include butene, isobutene, pentene, hexene, methylpentene, octene, decene, and dodecane.

(Second additive: Ethylene glycol and the like)

In kneading the microfiber cellulose and the resin, at least one or more additives (second additive) selected from the group consisting of ethylene glycol, derivatives of ethylene glycol, ethylene glycol polymers, and derivatives of ethylene glycol polymers may be added, in addition to the additive like polybasic acids. Addition of the second additive significantly improves dispersibility of the microfiber cellulose. In this regard, it is known by the present inventors and others that the dispersibility of cellulose fibers, when in the form of cellulose nanofibers, is hard to be improved. Irrespective of this, it is assumed that the second additive is interposed between the fibers of the microfiber cellulose to reduce the aggregation in the resin to thereby improve the dispersibility. In contrast, since cellulose nanofibers have a remarkably higher specific surface area than that of the microfiber cellulose, it is assumed that the second additive, even if added excessively, does not enter between cellulose nanofibers.

The amount of the second additive to be added may be preferably 0.1 to 1000 parts by mass, more preferably 1 to 500 parts by mass, particularly preferably 10 to 200 parts by mass, based on 100 parts by mass of the microfiber cellulose. With the amount below 0.1 parts by mass, the second additive may not contribute to the improvement in dispersibility of the microfiber cellulose. With the amount over 1000 parts by mass, the second additive is excessive and may adversely impair the resin strength.

The molecular weight of the second additive is preferably 1 to 20000, more preferably 10 to 4000, particularly preferably 100 to 2000. The molecular weight of the second additive below 1 is physically impossible. On the other hand, with a molecular weight over 20000, the second additive may be too bulky to enter between the fibers of microfiber cellulose.

(Molding treatment)

The kneaded product of the fibrous cellulose and the resin may be molded into a desired shape, following another kneading, if necessary. The size, thickness, shape, and the like resulting from the molding are not particularly limited, and the molded product may be in the form of, for example, sheets, pellets, powders, or fibers.

The temperature during the molding treatment is at or higher than the glass transition point of the resin, and may be, for example, 90 to 260 °C, preferably 100 to 240 °C, depending on the kind of the resin.

The kneaded product may be molded by, for example, die molding, injection molding, extrusion molding, hollow molding, or foam molding. The kneaded product may be spun into a fibrous shape, mixed with the above-mentioned plant materials or the like, and molded into a mat shape or a board shape. The mixing may be performed by, for example, simultaneous deposition by air-laying.

As a machine for molding the kneaded product, one or more machines may be selected and used from the group consisting of, for example, injection molding machine, a blow molding machine, a hollow molding machine, a blow molding machine, a compression molding machine, an extrusion molding machine, a vacuum molding machine, and a pressure molding machine.

The molding discussed above may be performed following the kneading, or by first cooling the kneaded product, chipping the cooled product in a crusher or the like, and then introducing the resulting chips in a molding machine, such as an extrusion molding machine or an injection molding machine. It is noted that the molding is not an essential requirement of the present invention.

(Definitions, method of measuring, and others)

(Average fiber diameter)

The average fiber diameter of the fine fibers (microfiber cellulose and cellulose nanofibers) is measured according to the following procedure.

First, 100 ml of an aqueous dispersion of fine fibers having a solid concentration of 0.01 to 0.1 mass% is filtered through a TEFLON (registered trademark) membrane filter, and subjected to solvent substitution once with 100 ml of ethanol and three times with 20 ml of t-butanol. Then the resulting mass is lyophilized and coated with osmium to obtain a sample. An electron microscopic SEM image of this sample is observed at a magnification of 3000 to 30000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken

as the average fiber diameter.

The average fiber diameter of pulp is measured according to the following procedure.

First, 100 ml of an aqueous dispersion of pulp having a solid concentration of 0.01 to 0.1 mass% is filtered through a TEFLON (registered trademark) membrane filter, and subjected to solvent substitution once with 100 ml of ethanol and three times with 20 ml of t-butanol. Then the resulting mass is lyophilized and coated with osmium to obtain a sample. An electron microscopic SEM image of this sample is observed at a magnification of 100 to 1000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber diameter.

(Aspect ratio)

An aspect ratio is a value obtained by dividing the average fiber length by the average fiber width. A larger aspect ratio causes a larger number of locations to be caught, which enhances the reinforcing effect but, on the other hand, is assumed to result in lower ductility of the resin.

(Water retention degree)

The water retention is a value determined in accordance with JAPAN TAPPI No. 26 (2000).

(Fiber analysis)

The percentage of the fibers having a fiber length of 0.2 mm or shorter, the percentage of fibrillation, and the average fiber length are measured using a fiber analyzer, FS5, manufactured by Valmet K.K.

(Degree of crystallinity)

The degree of crystallinity is a value determined in accordance with JIS K 0131 (1996).

(Viscosity)

The pulp viscosity is a value determined in accordance with TAPPI T 230.

(B-type viscosity)

The B-type viscosity of the dispersion (1% solid concentration) is a value determined in accordance with JIS-Z8803 (2011) "Methods for viscosity measurement of liquid". A B-type viscosity is a resistant torque in stirring a dispersion, and a higher value indicates more energy required for stirring.

(Freeness)

The freeness is a value determined in accordance with JIS P8121-2 (2012).

(Degree of substitution)

The degree of substitution with the carbamate groups is determined by Kjeldahl method for nitrogen determination. Examples

Next, Examples of the present invention will be discussed.

(Test Examples 1 to 4)

Softwood kraft pulp with a moisture percentage of 10 % or less and an aqueous urea solution with a solid concentration of 10 % adjusted with citric acid to pH 7 were mixed at a mass ratio of 10 : 10 in terms of solid, and dried at 105 °C. Then the resulting mass was heat-treated at a reaction temperature of 140 °C for a duration of reaction of 3 hours, to thereby obtain carbamate-modified cellulose.

The obtained carbamate-modified cellulose was diluted with distilled water and stirred to perform dehydration and washing, which were repeated twice.

The carbamate-modified cellulose thus washed was beaten in a Niagara beater for 4 hours, to thereby obtain carbamate-modified microfiber cellulose.

To 500 g of an aqueous dispersion of the carbamate-modified microfiber cellulose at a solid concentration of 2 mass%, 5 g of maleic anhydride-modified polypropylene and 85 g of polypropylene powder were added, and the resulting mass was dried under heating at 105 °C to obtain a material containing carbamate-modified microfiber cellulose. The moisture content of the material containing carbamate-modified microfiber cellulose was less than 10 %.

The material containing carbamate-modified microfiber cellulose thus obtained was kneaded at 180 °C in a twinscrew kneader at 200 rpm to obtain a carbamate-modified microfiber cellulose composite resin. This carbamate-modified microfiber cellulose composite resin was cut in a pelleter into cylinders of 2 mm long and 2 mm in diameter, and injection molded at 180 °C into a cuboid test piece (59 mm long, 9.6 mm wide, and 3.8 mm thick).

The obtained carbamate-modified microfiber cellulose composite resin was subjected to determination of flexural modulus, fracture strain, and amount of residual urea. The results are shown in Table 1.

(Flexural modulus and fracture strain)

Each resin was molded into a bending test piece. This bending test piece was subjected to measurement in accordance with JIS K7171: 2008 and, with reference to the flexural modulus of the resin per se being 1, the flexural modulus of the composite resin (multiple) was evaluated.

(Test Example 5)

Test Example 3 was followed, except that the obtained carbamate-modified cellulose was not subjected to dehydration and washing.

(Amount of residual urea)

A sample of the carbamate-modified cellulose which was subjected to the dehydration and washing, and a sample of the carbamate-modified cellulose which was not subjected to the dehydration and washing, were provided, and 1.5 g of each carbamate-modified cellulose sample was diluted with 300 ml of distilled water, and disintegrated in a mixer for 10 minutes. Then, the obtained aqueous solution was centrifuged at 8500 rpm for 10 minutes to recover the supernatant. The supernatant thus recovered was subjected to quantitative analysis of urea using an ultra high performance liquid chromatograph (model: Nexera X2, manufactured by SHIMADZU CORPORATION), and the amount of the residual urea was calculated from the obtained urea concentration and the amount of the distilled water added.

(Amount of carbamate-modified cellulose and amount of byproducts)

A reaction product obtained by carbamate-modification reaction of urea and pulp (cellulose) was diluted with distilled water to have a solid concentration of 1 %, mixed and stirred in a mixer, and dewatered by means of a No. 2 paper filter and a Buchner funnel. This procedure was repeated twice. The obtained solid material was dried at 105 °C for 6 hours, and the amount of carbamate-modified cellulose was determined. The amount of the byproducts (secondary products) was calculated by subtracting the amount of the carbamate-modified cellulose from the amount of the reaction product obtained by the carbamate-modification reaction.

[Table 1]

| | NBKP: Urea | MFC : MAPP | MFC average fiber width | Degree of substitution with carbamate | Flexural modulus | Fracture strain | Amount of residual urea | Amount of byproduct |
|---|---|---|---|---|---|---|---|---|
| | Mass ratio | Mass ratio | - | - | - | - | % | % |
| Test Example 1 | 10 : 10 | 10 : 1 | 0.1 μm or more | 0.05 or more and 0.5 or less | 1.3 times or higher | 9 % or higher | 0 | 0 |
| Test Example 2 | 10 : 10 | 10 : 3 | 0.1 μm or more | 0.05 or more and 0.5 or less | 1.3 times or higher | 9 % or higher | 0 | 0 |

(continued)

| | NBKP: Urea | MFC : MAPP | MFC average fiber width | Degree of substitution with carbamate | Flexural modulus | Fracture strain | Amount of residual urea | Amount of byproduct |
|---|---|---|---|---|---|---|---|---|
| | Mass ratio | Mass ratio | - | - | - | - | % | % |
| Test Example 3 | 10 : 10 | 10 : 5 | 0.1 $\mu$m or more | 0.05 or more and 0.5 or less | 1.3 times or higher | 9 % or higher | 0 | 0 |
| Test Example 4 | 10 : 10 | 10 : 10 | 0.1 $\mu$m or more | 0.05 or more and 0.5 or less | 1.3 times or higher | 9 % or higher | 0 | 0 |
| Test Example 5 | 10 : 10 | 10 : 5 | 0.1 $\mu$m or more | 0.05 or more and 0.5 or less | 1.3 times or higher | 9 % or higher | 23.5 | 69.0 |

Industrial Applicability

The present invention is applicable as a fibrous cellulose composite resin and a method for producing the same. For example, the fibrous cellulose composite resin may be applicable as interior materials, exterior materials, structural materials, and the like of transport equipment, such as vehicles, trains, vessels, and airplanes; casings, structural materials, internal components, and the like of electronic appliances, such as personal computers, televisions, telephones, and clocks; casings, structural materials, internal components, and the like of mobile communication equipment, such as mobile phones; casings, structural materials, internal components, and the like of mobile music reproduction equipment, video reproduction equipment, printing equipment, copying equipment, sports goods, office equipment, toys, sports goods, and the like; interior materials, exterior materials, structural materials, and the like of buildings, furniture, and the like; business equipment, such as stationaries, and the like; and packages, containers like trays, protection members, partition members, and various others.

## Claims

**1.** A fibrous cellulose composite resin comprising:

fibrous cellulose, a resin, and an acid-modified resin,
wherein part or all of the fibrous cellulose is microfiber cellulose,
the microfiber cellulose has hydroxyl groups, part or all of which are each substituted with a carbamate group, and has been defibrated into an average fiber width of 0.1 $\mu$m or larger, an amount of a byproduct generated in the substitution with a carbamate group is 10 % or less per 100 parts by mass of a carbamate-modified cellulose obtained through washing, and
the amount of the byproduct is measured by diluting the reaction product obtained by carbamate-modification reaction of urea and the fibrous cellulose with distilled water to have a solid concentration of 1 %, mixing and stirring in a mixer, dewatering by means of a No. 2 paper filter and a Buchner funnel, repeating washing operation from the diluting to the dewatering twice, drying the obtained solid material at 105 °C for 6 hours to provide the carbamate-modified cellulose obtained through washing, and calculating amount of the byproduct by subtracting the amount of the carbamate-modified cellulose from the amount of the reaction product obtained by the carbamate-modification reaction.

**2.** The fibrous cellulose composite resin according to claim 1, wherein a residual amount of urea is 10 % or less per 100 parts by mass of the carbamate-modified cellulose.

**3.** The fibrous cellulose composite resin according to claim 1 or 2, wherein a mixing ratio of the acid-modified resin is 1 to 200 parts by mass based on 100 parts by mass of the fibrous cellulose.

4. The fibrous cellulose composite resin according to any one of claims 1 to 3, wherein the acid-modified resin is a maleic anhydride-modified resin.

5. A method for producing a fibrous cellulose composite resin comprising:

(1) heat-treating a cellulose raw material and at least one of urea and derivatives thereof to obtain a carbamate-modified cellulose,
(2) washing the carbamate-modified cellulose,
(3) defibrating the carbamate-modified cellulose to obtain a dispersion of carbamate-modified microfiber cellulose having an average fiber width of 0.1 μm or larger,
(4) mixing the dispersion of carbamate-modified microfiber cellulose and an acid-modified resin to obtain a material containing carbamate-modified microfiber cellulose, and
(5) kneading the material containing carbamate-modified microfiber cellulose with a resin to obtain a fibrous cellulose composite resin.

6. The method for producing a fibrous cellulose composite resin according to claim 5, wherein resin powder is admixed in step (4).

**INTERNATIONAL SEARCH REPORT**

International application No.
PCT/JP2020/031806

A. CLASSIFICATION OF SUBJECT MATTER
C08L 1/02(2006.01)i; C08L 23/26(2006.01)i; C08L 101/00(2006.01)i
FI: C08L1/02; C08L101/00; C08L23/26
According to International Patent Classification (IPC) or to both national classification and IPC

B. FIELDS SEARCHED
Minimum documentation searched (classification system followed by classification symbols)
C08L1/02; C08L23/26; C08L101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2019-1876 A (KYOTO UNIVERSITY) 10 January 2019 (2019-01-10) claims, paragraphs [0018], [0030], [0057], [0067], [0069], examples 3, 5 | 1-6 |
| A | JP 2017-105983 A (KYOTO UNIVERSITY) 15 June 2017 (2017-06-15) | 1-6 |
| A | JP 2018-199891 A (DAIO PAPER CORP.) 20 December 2018 (2018-12-20) | 1-6 |
| A | JP 2000-505135 A (RHODIA ACETOW AKTIENGESELLSCHAFT) 25 April 2000 (2000-04-25) | 1-6 |
| A | JP 2017-66272 A (OJI HOLDINGS CORPORATION) 06 April 2017 (2017-04-06) | 1-6 |
| A | JP 2017-52940 A (KAO CORP.) 16 March 2017 (2011-03-16) | 1-6 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 October 2020 (14.10.2020) | 27 October 2020 (27.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/031806

| Patent Documents referred in the Report | Publication Date | Patent Family | Publication Date |
|---|---|---|---|
| JP 2019-1876 A | 10 Jan. 2019 | WO 2018/230600 A1<br>CN 110741020 A<br>KR 10-2020-0019687 A<br>CA 3067521 A<br>EP 3640265 A1<br>claims, paragraphs [0018], [0030], [0057], [0067], [0069],examples 3,5 | |
| JP 2017-105983 A | 15 Jun. 2017 | US 2018/0362405 A1<br>WO 2017/094812 A1<br>CN 108368347 A | |
| JP 2018-199891 A | 20 Dec. 2018 | (Family: none) | |
| JP 2000-505135 A | 25 Apr. 2000 | WO 1998/002464 A1<br>EP 910585 A1<br>AU 3443497 A<br>PL 331046 A<br>CZ 4199 A<br>BR 9710297 A<br>CA 2260782 A | |
| JP 2017-66272 A | 06 Apr. 2017 | (Family: none) | |
| JP 2017-52940 A | 16 Mar. 2017 | JP 2017-53077 A<br>US 2019/0023859 A1<br>US 2019/0169314 A1<br>WO 2017/043452 A1<br>WO 2017/043454 A1<br>EP 3348581 A1<br>EP 3348619 A1<br>TW 201718720 A<br>CN 107949605 A<br>CN 107949577 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019001876 A